Europäisches Patentamt

European Patent Office

Office européen des brevets

(11) Publication number: **0 305 071**
**A2**

## (12) EUROPEAN PATENT APPLICATION

(21) Application number: **88307291.0**

(22) Date of filing: **08.08.88**

(51) Int. Cl.⁴: **A21D 6/00**

(30) Priority: **24.08.87 US 89195**

(43) Date of publication of application:
**01.03.89 Bulletin 89/09**

(84) Designated Contracting States:
**AT BE CH DE ES FR GB GR IT LI LU NL SE**

(71) Applicant: **GENERAL FOODS CORPORATION**
**250 North Street**
**White Plains, N.Y. 10625(US)**

(72) Inventor: **Seneau, Bernard**
**18 Brookside Drive**
**Woodbridge Connecticut 06525(US)**

(74) Representative: **BATCHELLOR, KIRK & EYLES**
**2 Pear Tree Court Farringdon Road**
**London EC1R 0DS(GB)**

(54) **Process for making preproofed unbaked and frozen doughs.**

(57) A laminated dough is prepared and formed into a desired shape while being maintained at 10°C (50°F) or below at substantially all times. The dough is then fully proofed, frozen and stored in a freezer until needed at which time the frozen dough is placed directly in an oven without intervening thawing or proofing steps.

EP 0 305 071 A2

# PROCESS FOR MAKING PREPROOFED, UNBAKED AND FROZEN LAMINATED DOUGHS

## BACKGROUND OF THE INVENTION

The present invention is directed to a method of manufacturing a preproofed, unbaked, frozen laminated dough and the actual dough itself. In today's current market, huge commercial potential exists for the manufacturer of frozen, laminated bakery products such as croissants and danish or non-laminated products such as breads and rolls which can be sold to the consuming public. Today, two general methods of manufacture exist for providing bakery products to the consuming public, both of which methods, of course, require that the bakery product be shipped in the frozen stage to the consuming public. Upon receipt, depending upon which method of manufacture is employed, the frozen bakery product is either merely reheated, since it may have already been baked, or else is thawed, proofed, possibly egg washed and then freshly baked. In this connection, it should be appreciated, that the consuming public as used herein is either a family household which purchases the frozen product or, alternatively, a store or restaurant which purchases the frozen product for resale to ultimate consumers either as a frozen product or as a fresh baked product.

In the manufacture of both pre-baked, frozen, laminated baked goods and frozen, laminated doughs, the initial processing steps are somewhat comparable. First a dough is prepared in the normal manner by combining and mixing flour, water, yeast, yeast food, salt and optionally butter, milk solids, egg solids and dough conditioners. The dough is then processed through a series of sheeting operations wherein the dough is reduced in thickness, coated with a fat-based roll-in and folded such that adjacent layers of dough are separated by a layer of fat. The dough may be sheeted and laminated one or more times and is then sheeted to a final thickness, cut and formed to a desired size and shape. Depending on the product desired, the dough product is then immediately frozen or else proofed, baked and thereafter frozen.

If a frozen, baked bakery product is sold to the consuming public, the product is merely selectively reheated in an oven or toaster prior to consumption. This procedure suffers from the disadvantage that the product is not freshly baked but merely reheated. It will be appreciated that a store or restaurant which can advertise that croissants, pastries and danish as "freshly baked on the premises" is at a tremendous business advantage over those establishments wherein the laminated baked good is merely reheated on the premises, having been baked elsewhere and then frozen.

Heretofore, commercial establishments which are not capable or not desirous of baking from "scratch" have been producing fresh baked products by purchasing frozen unproofed doughs, subjecting the doughs to controlled thawing and proofing operations, usually a manual egg wash and then a controlled baking step at a set temperature for a set time. Proofing requires that the thawed dough be subjected to a controlled humidity and temperature for a period of time to obtain a desired increase in volume for the dough. Obviously, it will be appreciated that the difficulty, variety and number of steps which are required to be performed on the unbaked, unproofed, frozen dough product prior to its assuming a final ready-to-eat state is subject to much mishandling and, consequently, a poor quality final product results. Further, the extent of time necessary to obtain the ready-to-eat product makes it difficult for the establishment to deal with unexpectedly high or low business demands for the product.

Processing laminated dough by proofing and then freezing, such that a business establishment would merely thaw and bake or directly bake from the freezer, has not heretofore been widely practiced commercially. Such processes have been disclosed in the prior art in U.S. Patents 4,406,911 and 4,450,177 to Larson et al and French Brevet D'Invention 2,344,229 to Bourdon. These processes have for the most part been considered by skilled bakers to be impractical and not capable of yielding high-quality, laminated, bakery products. It has also been the finding or fear of skilled bakers that proofed doughs would suffer a decrease in volume as a result of the freezing process and/or during periods of prolonged freezer storage, and that the baked products would have an unacceptable volume and density.

## SUMMARY OF THE INVENTION

The present invention contemplates the manufacture of a frozen, preproofed, yet unbaked, laminated dough product which is able to be immediately placed into an oven for fresh, on-premises baking without the necessity of the thawing or proofing steps which would be necessary for the baking of a frozen, unproofed dough.

The present invention is directed to the method of manufacture and final product of a preproofed, unbaked frozen laminated dough which is capable of being simply removed from a freezer and placed directly into a preheated or cold oven for baking and serving. The laminated dough of the present invention is already fully proofed, prior to freezing and, therefore, the proofing step which is normally required after thawing of a frozen dough product is eliminated. The need to have a skilled baker present during the proofing step is also eliminated. The present invention permits proofing before freezing with and enables the substantial retention of the proofed volume both during freezing and during freezer storage The present invention also permits the development of a desirable baked volume and desirable baked texture and appearance from the frozen, proofed dough after freezing (e.g. blast freezing) and/or after periods of prolonged freezer storage.

The present invention is accomplished by utilizing combinations of conventional dough ingredients and certain controlled temperature conditions for both preparing and handling or working the prepared, laminated dough. The dough may be formulated using one or a mixture flours as is known in the art. In contrast to standard processing, the temperature employed during both mixing and processing in accordance with this invention is less than 10°C (50°F) at substantially all times prior to the final proofing step. The temperatures referred to herein are the temperatures of the dough or dough ingredients and not necessarily those of the surrounding atmosphere. The American Institute of Baking has stated (Dubois, "Croissant Technology," AIB Technical Bulletin, Vo. VIII, Issue 10, October 1986) that 66± 2°F (18.8 ± 1.1°C) is the ideal temperature for processing croissant doughs.

Ideally, the dough temperature is kept as cold as practical, even approaching temperatures on the order of 1.6°C (35°F) or lower; however, at temperatures approaching freezing, the dough may be difficult to handle and process through the required laminating and molding procedures. According to this invention the dough is maintained at less than 10°C (50°F) at substantially all times prior to proofing. Preferably this temperature is less than about 7.2°C (45°F) and more preferably less than 4.4°C (40°F).

The term "substantially all times" is meant to account for the fact that producing laminated doughs usually involves extended processing times and several processing operations. Brief periods of time above a target temperature which might occur, such as during a mixing or laminating step or while the dough is being transported between processing operations are tolerable. Such periods of elevated temperature can be quantified utilizing degree-minute terminology wherein each one minute above the target temperature is multiplied by the number of degrees above the target temperature and then a total degree-minute value is obtained by adding the value of each minute. Thus one minute at 5° above the target temperature has a degree-minute value of five, and ten minutes at this temperature would have a degree-minute value of fifty. In accordance with the invention, excess temperature should not exceed a cumulative degree-minute value (basis °F) of 500 (278), preferably 300 (167), more preferably 100 (55.6), still more preferably 30 and most preferably 0. Dough temperature should not however rise to above 15.5°C (60°F) preferably 12.7°C (55°F), at any time. In conventional processing of laminated doughs, the dough would beat a temperature of about 18.3°C (65°F) for about one hour or more between the end of mixing and the beginning of proofing.

The processing operations which will be more fully described below are individual procedures which are well known to skilled bakers. However, the operating conditions and order in which the operations are performed define a novel process which is known to skilled bakers.

This invention will be futher described primarily in terms of croissants, a laminated baked good which has gained wide acceptance in the U.S. marketplace in recent years. It should be understood, however, that laminated doughs for producing other laminated baked goods such as danish pastries, danish twists, danish rings, brioches, pain brioches, sweet rolls, cinnamon rolls and the like, either with or without fillings and/or coatings are also within the scope of the invention.

The term "laminated dough", as used herein, refers to a dough product prepared by a process which includes one or more sheetings steps, a step wherein a fat-based material is coated onto at least a portion of the dough before the dough is formed into final shape and cutting and/or molding steps to produce a dough product for proofing. Laminated processing is meant to distinguish from bread processing wherein the bulk dough is merely subdivided and formed into a desired shape prior to proofing. It has been found that non-laminated doughs (e.g. bread doughs) are adversely affected by the low-temperature processing of this invention, as evidenced by a poor baked texture being produced from low-temperature bread dough processing.

## DETAILED DESCRIPTION OF THE INVENTION

According to the present invention, a preproofed unbaked and frozen laminated dough is provided which allows the purchaser to merely place the frozen laminated dough in either a cold or preheated oven for baking, without the preparer being required to thaw and proof the dough prior to baking. By utilizing the frozen, laminated dough product of this invention a commercial establishment is able to quickly and simply prepare a fresh baked laminated baked good on premises without the need of either skilled bakers or new equipment such as proof boxes.

It is preferred that the proofed, frozen, laminated dough of the invention possesses a surface coating, for example, an egg-wash coating or the like. Such coatings are conventionally applied to doughs prior to baking in order to develop a golden brown-colored surface on the product during baking. According to this invention, such a coating would desirably be applied to the proofed, laminated dough before and/or after the dough is frozen. The egg-washed frozen dough product will have improved stability and the baked product will have improved appearance as compared to products which have not been egg-washed. The coating material will preferably be one which will produce a protein-type film on the surface of the dough; however starch-based coatings could also be employed.

The dough formulation employed in the present invention will vary depending upon the type of bakery product being prepared. The doughs will typically contain a fat level of from 0% to 20%, egg solids of from 0% to 25%, non-fat milk solids of from 0% to 12%, a sugar level of from 3% to 25%, yeast at from 1.5% to 7%, yeast food at from 0% to 5% and water at from 40% to 70%. The water component could be part of an aqueous fluid such as milk. Unless otherwise noted, all percentages refer to baker's weight percents wherein the weight of each non-flour ingredient contained in the dough is expressed as a weight percent of the flour ingredient of the dough.

The flour employed for the laminated products of this invention will preferably be wheat flour which typically will have a protein content of less than 16% protein by weight and more typically from 11.5% to 14.5% protein by weight. Such flour may be obtained from hard red winter and hard red spring wheats which may be blended or air classified in order to obtain a flour having the desired protein level.

The fat which is used in the dough formulation may include such materials as butter, margarine and/or vegetable shortening or the like. Additionally fat is included as a component of a fat-based roll-in ingredient which may be coated onto the sheeted dough in one or more separate operations. The fat-based roll-in may include ingredients such as butter, margarine, shortening, cheese, cinnamon and other spices, nut meats, etc. The fat-based roll-in will typically be used at a level of from 15% to 50% by weight of the dough.

Regular sweet doughs such as used in the production of sweet rolls and coffee cakes will contain from 15% to 5% of fat in the dough itself with little or no fat-based roll-in. Roll-in sweet doughs, such as Danish pastry, will normally contain from 5% to 20% fat in the dough itself and from 15% to 50% (based on weight of dough) fat-based roll-in ingredient. Sweet doughs, both regular and roll-in, will typically contain a sugar level in the dough which is at least about as great as the fat level in the dough. Doughs, which are used in the production of such non-sweet, laminated pastry products as croissants and short pastry will typically have little or no fat contained in the dough and from 15% to 50% (based on weight of dough) fat present as fat-based roll-in ingredient.

According to the process of this invention, the various doughs described above are prepared utilizing either the straight dough process or the sponge dough process. Both of these procedures are well-known to those skilled in the art.

In either event, steps are taken to ensure that the dough both during and after mixing and until proofing does not exceed the target temperature of $10\degree C$ ($50\degree F$), preferably $7.2\degree C$ ($45\degree F$) and most preferable $4.4\degree C$ ($40\degree F$) for any substantial period of time. Such procedures as using refrigerated dry ingredients, ice water, $CO_2$ injection, jacketed mixing vessels, chilled ambient air, cold rooms and the like may be utilized in order to maintain low dough temperatures.

After mixing has been effected, and usually after a refrigerated rest step (i.e. retarding), the dough is sheeted, typically 10 to 25 mm., and any desired fat-based roll-in ingredient is coated onto the sheeted dough. The retarding step will usually extend for about one to eight hours and will typically occur in a cooled room having a temperature between about $4.4\degree C$ ($40\degree F$) and $1.6\degree C$ ($35\degree F$). The roll-in and laminating procedures suitable for use in this invention may be any of those known and employed in the baking industry and can and will vary depending on the equipment available and the desired end product. According to one common process, the roll-in is coated across two-thirds of the dough sheet and then the uncoated portion of the sheet is folded onto the central third of the sheet followed by folding the remaining coated-third of the sheet on top of the uncoated surface. In this manner, a laminate of three dough layers separated by two fat layers is formed. Should additional laminations be desired in the final product, successive sheeting, optionally roll-in coating and folding cycles may be repeated. Usually a resting period of at least 15 minutes, at a temperature of between 1.6°C (35°F) and 7.2°C (45°F) is included between each cycle so that the dough temperature can be controlled and the dough may be more readily handled. A final sheeting step, which may occur after a prolonged (e.g., 4 to 48 hours) refrigerated and/or freezer rest period, will usually be effected in the production of the laminated dough products of this invention.

The sheeted laminated doughs of the invention will be cut into a desired form and rolled or folded into the shape of the product desired. Fruit fillings, cinnamon, nuts and/or fruit pieces may be added into or onto the dough product either before or after shaping the product. Of course, it would be possible to add these types of ingredients onto the shaped product immediately before baking.

The shaped dough is then subjected to a proofing step where for yeast-leavened doughs the dough is typically subjected to a temperature of from 21.1°C (70°F) to 40.5°C (105°F) and a relative humidity of at least 60% for a period of at least 40 minutes. The proof temperature should not exceed the melting point of any fat-based roll-in. The proofing time should be sufficient to permit the dough to expand to at least 2 times the unproofed volume. Preferably the dough is proofed to at least 2.5 to 3 times the unproofed volume. Proofing will usually be effected by means of yeast-generated carbon dioxide; however, chemical leavening could likewise be utilized to generate all or a portion of the carbon dioxide needed for proofing. Non-heat activated leavening agents such as sodium bicarbonate in combination with various tartrate, pyrophosphate or orthophosphate salts are useful for this purpose.

After proofing is completed, the dough is coated with an egg wash and then frozen to a core temperature of less than -12.2°C (10°F). Freezing may occur at either a fast (e.g. blast freezing) or slow (e.g. static freezing) rate. Freezing time will be greatly dependent on the size of the proofed-dough piece. Operating in accordance with this invention permits the use of blast freezing without the proofed dough undergoing volume shrinkage during the freezing process.

After freezing is completed, a thin film of egg wash may be applied to the frozen dough. The coating almost instantly freezes on the dough surface which is typically at a temperature of -17.8°C (0°F) or less.

The completely frozen and possibly coated dough is preferably stored in a freezer until immediately prior to baking. The frozen dough can be removed from frozen storage after a prolonged time and immediately baked, typically at about 320 to 350°F. The time of baking will be dependent on the size of the frozen dough piece and the temperature selected for baking.

The frozen dough products of this invention may be stored for prolonged periods of time in commercial and/or home freezers having a temperature greater than -40°C (-40°F) and typically between about -20.6°C (-5°F) and -9.4°C (15°F). Temperatures below -40°F (-40°C) should be avoided as yeast rupture and freeze dehydration can result. The frozen dough will not undergo significant shrinkage during frozen storage. The dough will exhibit a perceptible amount of oven-spring, typically expanding by an amount about equal to its unproofed volume.

## EXAMPLE 1

A croissant dough is prepared by mixing the ingredients as follows:

|  | Weight % (Flour Basis) |
| --- | --- |
| Patent Flour | 78 |
| Clear Flour | 22 |
| Yeast | 2-4 |
| Sugar | 8 |
| Salt | 1.75 |
| Water | 58 |

The dry ingredients are removed from cold storage and thoroughly mixed together. One-third of the water is added as ice water and mixing is continued. A second and last third of the water component is added as water and/or ice as needed in order to maintain the temperature of the mixture below about 4.4°C (40°F). Total mixing time including dry-blending was about 22 minutes. The resulting dough was cut into twelve pound pieces and refrigerated at 1.6°C (35°F) for about six hours. The dough pieces are removed from refrigeration and sheeted to about 2 to 2.5 inches; 3.6 pounds of cooled (1.6°C) butter is spread over one-half of the sheet and then the sheet is folded. The folded dough is then flattened to about 1.25 inches, maintaining the original width and increasing the length fourfold. The flattened dough is then folded in thirds, as is conventional, flattened to about 1.25 inches and then folded in thirds and flattened again. The dough is then rested for about 1.5 hours at 1.6°C (35°F). The flattening and laminating process was conducted in a cool room having a temperature not exceeding 12.7°C (55°F) and the dough temperature did not elevate above 4.4°C (40°F).

After the resting step, the dough is folded in thirds, sheeted to about 1/4 to 3/8 inches, cut into triangles and formed into croissant shape and placed on a pan. The panned croissants are then placed in a fermentation or proofing room at 29.4°C (85°F) and 70% R.H. for from 45 to 75 minutes during which time he volume increases about 2 to 2.5 times original volume via yeast generated $CO_2$. The proofed croissant are placed in a -34.4°C (-30°F) blast freezer for 30 minutes or until the central core reaches about -17.8°C (0°F) to about -12.2°C (10°F). Upon removal from the blast freezer the croissants are coated with a thin film of egg wash which almost instantly freezes on the surface. The croissants are then packaged and stored at -17.8°C (0°F) until needed for baking. The croissants are removed from the freezer and placed into a preheated oven at 177°C (350°F) for about 15-17 minutes to produce a beautiful flaky, golden croissant.

## EXAMPLE 2

Croissant dough was prepared containing the following ingredients:

|  | Weight % (flour basis) |
| --- | --- |
| Patent Flour | 100.0 |
| Water | 58.4 |
| Butter (as roll-in) | 38.5 |
| Sugar | 9.6 |
| Yeast | 3.4 |
| Dough Conditioners | 1.0 |
| Salt | 1.0 |

The dry ingredient as set forth above were mixed and combined with 4.4°C (40°F) or less water to form a dough which comes out of the mixer at a temperature of about 7.2°C (45°F). The dough is divided and chilled to 2.8°C (37°F) in a freezer and then placed in a retard room at 1.6°C (35°F) to 4.4°C (40°F) to bring the total chill time to greater than one hour. The dough is then sheeted, coated with butter, laminated as described in Example 1 and then returned to the retard room for 1.5 to hours. The retarded dough is next sheeted, folded in thirds and placed in a -23.3°C (-10°F) freezer overnight. The following day the frozen dough is moved to the retard room where it is again left overnight. The dough which has a temperature on the order of 1.6°C (35°F) is then subjected to a final sheeting and formed into croissants as in Example 1. The croissants are then proofed at 26.7°C (80°C) to 32.2°C (90°F) and 65 to 75% R.H. To obtain a density of about 0.4 g/cc. Thereafter the proofed croissants are egg washed and then blast frozen to a core temperature of -17.8°C (0°F). After several weeks of frozen storage, the frozen proofed croissants can be baked directly from the freezer to produce fresh baked croissants having excellent flavor, texture and color.

## EXAMPLE 3

Frozen, proofed cinnamon rolls were prepared using a sponge and dough process.

| Ingredients | Weight % (flour basis) |
|---|---|
| Sponge: | |
| Patent Flour | 70.0 |
| Gluten | 3.0 |
| Yeast | 8.0 |
| Yeast Food | 0.5 |
| Water (40° F) | 45.0 |
| Dough: | |
| Patent Flour | 30.0 |
| Shortening | 10.0 |
| Sugar | 8.0 |
| Non-Fat Dry Milk | 4.0 |
| Dry Egg Yolk | 3.0 |
| Salt | 1.5 |
| Spice and Flavors | 0.6 |
| Dough Conditioners | 2.0 |
| Water (40° F) | 18.0 |

The sponge was prepared by mixing yeast and the chilled water until the yeast is hydrated. The flour and yeast food were added and mixing was continued for about three minutes. The sponge was placed in a greased container and then held in a 4.4° C (40° F) retarder where it was allowed to ferment for about two hours. The sponge was then returned to a mixer and the dough ingredients were added. Mixing was then continued for about 10 minutes. Dry ice was added during mixing so that the final dough temperature was 10° C (50° F). The dough was then sheeted on a reversible sheeter to a thickness of 5 mm. The sheeted dough was then coated with a fat-based filling consisting of sugar, margarine and cinnamon at a level of 42% by weight of the dough. The sheet was then rolled into log form and placed in a freezer to reduce the temperature of the dough to about 7.2° C (45° F). The chilled log was cut into 3.5 inch slices which were then proofed at 35° C (95° F) and 85% R.H. for 30 to 35 minutes and frozen in a -17.8° C (0° F) static freezer to a core temperature of -17.8° C (0° F).

After four months storage at -17.8° C (0° F) the frozen cinnamon rolls can be directly baked from the freezer at about 149° C (300° F) for 50-60 minutes producing a fresh-baked product having excellent quality with a light, airy and small-grained texture.


EXAMPLE 4


Frozen, proofed cherry danish was prepared using a straight dough procedure.

| Ingredients | Weight % (flour basis) |
|---|---|
| Patent Flour | 100.0 |
| Water (40° F) | 60.0 |
| Sugar | 18.0 |
| Shortening | 15.0 |
| Yeast | 6.0 |
| Egg Yolk Solids | 3.0 |
| Non-Fat Dry Milk | 3.0 |
| Salt | 1.5 |
| Conditioners | 1.5 |
| Flour | 1.5 |
| Ascorbic Acid | 0.02 |

Water, yeast, sugar, salt and ascorbic acid were thoroughly mixed together; thereafter, the remaining ingredients were added and mixed for about 22 minutes in a jacketed mixer. Dry ice was added throughout the mixing cycle to maintain the dough temperature below 10°C (50°F). The dough was then sheeted on a reversible sheeter, margarine at a level of about 19% by weight of the dough was coated onto the sheet and the sheet folded upon itself. This laminate was then sheeted, given a four-fold, then re-sheeted and given a three-fold. The resulting dough was a 24 layer laminate or book. This book was then retarded for three hours at 4.4°C (40°F) after which the book was sheeted to a thickness of 6.0mm (0.236 in.), cut into 40.6 cm (16 in.) wide strips, sprayed with water and rolled tightly to form a log. The log was then cut into 3.18 cm (1.25 in.) slices. The center of each slice was depressed and cherry filling (14.2 g) was placed in each depression. The formed danish was then proofed at 32.2°C (90°F) and 85% R.H. to reach a 3/4 proof. The proofed danish were frozen in a -23.3°C (-10°F) blast freezer and stored at -17.8°C (0°F) for five months. The frozen, proofed danish were then removed from the freezer, placed directly in a 149°C (300°F) convection oven for 25-30 minutes. The baked danish had excellent quality with a light and flaky texture, good layering and a soft, moist dough.

## Example 5

A study was conducted to demonstrate the significance of the invention claimed herein by reference to the quality of croissants which are prepared from proofed, frozen dough which had been produced according to the low-temperature process fo this invention versus baked croissants (control) which were prepared from proofed, frozen doughs which had been produced according to conventional temperature processing.

The dough formulation used for producing the preproofed frozen croissants was as follows:

| Ingredient | Baker's Percent |
|---|---|
| Patent Flour | 100 |
| Water | 60 |
| Sugar | 10 |
| Yeast | 3.5 |
| Salt | 1.0 |
| Mineral Yeast Food | 0.50 |
| Ascorbic Acid (added as 0.2% aqueous solution) | (40 ppm) |
| Gluten | 0 or 3 |
| Unsalted Butter (as roll-in) | 43 |

The doughs were prepared by combining all ingredients, except for roll-in fat, in a mixer (Hobart™ model A120-T mixer) and mixing together for about four minutes. The temperature of the dough during mixing was controlled such that at the end of the mixing step the dough, as measured by a thermocouple inserted in the dough mass, had a desired temperature of 35, 50 or 65°F. The dough was then sheeted to a thickness of 8mm and all of the butter was diaper-folded in. The dough was again sheeted to 8mm and given a 4-fold. The dough was next rested in a 1.6°C (35°F) retarder box for 30 minutes, removed from the retarder, sheeted in opposite direction to a thickness of 8mm, given a 4-fold, returned to the retarder for 30 minutes, again sheeted in the opposite direction to 8mm and then given a 3-fold. The dough piece which now has a total of 48 layers is held in the retarder for about 16 to 18 hours. The dough was then removed from the retarder, sheeted in the opposite direction to 5mm, cut into triangles (4-3/4 in base x 4-1/2" height), rolled into croissant shape and placed on trays in crescent shape. The croissants were then placed on a proof box (90°F and 85% R.H.) and allowed to expand to a desired increased volume of either 2x, 2.5x or 3x. The proofed croissants were then placed in a -20°F blast freezer to thoroughly freeze (0°F core temperature) the dough pieces.

The proofed and frozen doughs were stored at -17.8°C (0°F) and for storage times of one day, one week and one month. Croissants were pulled from storage, placed in a preheated oven (160°C/320°F) and baked for 20 minutes. The baked croissants were evaluated by a three member, trained panel for evenness of crumb, crust color, crumb grain and flakiness of crumb. An overall average quality assessment (AQA) was obtained by averaging the rating of these four attributes from the panel. The maximum value for each AQA was 5 and the minimum value was one. Panel assigned a rating of 1, 2, 3, 4 or 5 to each attribute.

A split plot design was used to evaluate three mix temperatures (35° F, 50° F, and 65° F), three proof volumes (2x, 2.5x and 3x) and the presence of gluten on the frozen croissants at the three previously-noted storage times. the volume/gluten combination was the whole plot and the temperature was the split plot. The experiment was replicated twice in order to improve the significance of the results. Multiple comparison tests on the means of each variable (i.e. temperature, proof volume, presence of gluten) show that lower mix temperature of 35 and 50° F are significantly different and preferred from a temperature of 65° F. The study also established that higher proof volume of 2.5x and 3x are significantly different and preferred over a 2x proof volume. Numerical AQA results are set forth in Tables 1, 2 and 3.

TABLE 1

| AQA By Storage Time | | | |
| --- | --- | --- | --- |
| Mix. Temp. | 1 Day | 1 Week | 1 Month |
| 35° F | 3.94 | 3.94 | 3.73 |
| 50° F | 3.83 | 3.98 | 3.71 |
| 65° F | 3.60 | 3.48 | 3.19 |

TABLE 2

| AQA by Storage Time | | | |
| --- | --- | --- | --- |
| Proof Volume | 1 Day | 1 Week | 1 Month |
| 2x | 3.71 | 3.6 | 3.44 |
| 2.5x | 3.77 | 3.87 | 3.48 |
| 3.0x | 3.90 | 3.92 | 3.71 |

TABLE 3

| AQA by Proof Volume | | | |
| --- | --- | --- | --- |
| Mix Temperature | 2x | 2.5x | 3x |
| 35° F | 3.729 | 3.875 | 4.000 |
| 50° F | 3.833 | 3.812 | 3.875 |
| 65° F | 3.187 | 3.438 | 3.646 |

As could be expected, increased proof volumes resulted in reduced baked density as compared to a proof volume of 2x. In terms of baked density, a mix temperature of 35° F was significantly different and preferred over 65° F, while 35° F and 50° F and 50° F and 65° F were not found to be significantly different from each other.

## Claims

1. A process for manufacturing a preproofed, unbaked and frozen laminated dough which can be baked directly from the freezer without an intervening thawing or proofing step to produce a laminated baked good of high quality comprising the steps of:

(a) mixing together the dough ingredients or sponge and dough ingredients, including all flour, leavening agent and aqueous fluid to form a dough, said mixing being conducted such that the temperature of the resulting dough is maintained during all or substantially all of said mixing step at a temperature of 50° F or less;

(b) promptly cooling the fully mixed dough to a temperature of 50° F or less in the event the dough exiting the mixer has risen in temperature to above 50° F during the last stages of mixing;

(c) sheeting and folding the dough at least one time in order to form a laminated dough;

(d) giving a final sheeting to the laminated dough; thereafter,

(e) subdividing the dough and forming a plurality of dough pieces having a desired shape;

(f) maintaining the temperature of the dough at 50° F or less at substantially all times during step (c) to (f) and during any other step between mixing and proofing;

(g) proofing the shaped dough pieces under controlled conditions of temperature and humidity to obtain a desired increase in volume;

(h) freezing the proofed dough pieces; and

(i) storing the frozen dough pieces in a freezer until baking is desired.

2. The method of claim 1 wherein the temperature of the dough is maintained at 45° F or less.

3. The method of claim 1 wherein the aqueous fluid is ice water.

4. The method of claim 1 wherein the flour employed in the mixing step is chilled to a temperature of 40° F or below.

5. The method of claim 1 wherein the dough pieces are proofed to a volume of from 2.0 to about 3 times the unproofed volume.

6. The method of claim 1 wherein the sheeted dough is coated with a fat-based roll-in and then folded to form a laminate.

7. The method of claim 6 wherein the dough piece is shaped to form a croissant.

8. The method of claim 6 wherein the dough ingredients contain sugar and the dough piece is shaped to form a danish.

9. The method of claim 6 wherein the roll-in contains cinnamon and the dough piece is shaped to form a cinnamon roll.

10. The method of claim 1 wherein the proofed dough piece is surface-coated with a protein, film-forming material before and/or after freezing.

11. The method of claim 1 wherin after mixing the dough is retarded under refrigerated conditions for at least one hour.

12. The method of claim 1 wherein before final sheeting the dough is subjected to freezer and/or refrigerated conditions for at least four hours.

13. A process for manufacturing a preproofed, unbaked, laminated and frozen dough which can be baked directly from the freezer without an intervening thawing or proofing step to produce a laminated baked good of high quality comprising the steps of:

(a) mixing together dough ingredients or sponge and dough, including all flour, leavening agent and aqueous fluid to form a dough, said mixing being conducted such that the temperature of the resulting is maintained during all or substantially all of said mixing step at a temperature of 50° F or less;

(b) promptly cooling the fully mixed dough to a temperature of 50° F or less in the event the dough exiting the mixer has risen in temperature to above 50° F during the last stages of mixing;

(c) sheeting the cooled dough

(d) spreading a desired amount of a fat-based roll-in having a temperature of about 50° F or less onto at least a portion of the dough surface and covering the roll-in with dough such that a roll-in layer is sandwiched between two dough layers;

(e) folding the coated dough to form a laminate;

(f) sheeting and folding the dough of step (e) one or more times to obtain a desired multiple-layered, laminated dough having a predetermined thickness;

(g) giving a final sheeting to the laminated dough; thereafter,

(h) subdividing the dough and forming a plurality of dough pieces having a desired shape;

(i) maintaining the temperature of the dough at 50° F or less at substantially all times during step (d) to (h) and during any other step between mixing and proofing;

(j) proofing the shaped dough pieces under controlled conditions of temperature and humidity to obtain a desired increase in volume;

(k) freezing the proofed dough pieces; and

(l) storing the frozen dough pieces in a freezer until baking is desired.

14. The method of claim 13 wherein the temperature of the dough is maintained at 45° F or less.

15. The method of claim 13 wherein the aqueous fluid is ice water.

16. The method of claim 13 wherein the flour employed in the mixing step is chilled to a temperature of 40° F or below.

17. The method of claim 13 wherein the dough pieces are proofed to a volume of from 2.5 to about 3 times the unproofed volume.

18. The method of claim 13 wherein the dough piece is shaped to form a croissant.

19. The method of claim 13 wherein the dough ingredients contain sugar and the dough piece is shaped to form a danish.

20. The method of claim 13 wherein the roll-in contains cinnamon and the dough piece is shaped to form a cinnamon roll.

21. The method of claim 13 wherein the proofed dough piece is surface-coated with a protein, film-forming material before and/or after freezing.

22. The method of claim 13 wherin after mixing the dough is retarded under refrigerated conditions for at least one hour.

23. The method of claim 13 wherein before final sheeting the dough is subjected to freezer and/or refrigerated conditions for at least four hours.